# FASCICULE DE BREVET EUROPEEN

(11) **EP 0 838 628 B1**
(45) Date de publication et mention de la délivrance du brevet: **04.10.2001**
(21) Numéro de dépôt: 97402498.6
(22) Date de dépôt: 22.10.1997
(51) Int. Cl.: F21S 8/12, F21V 8/00, B60Q 1/00

(54) **Projecteur à conduit de lumière pour véhicules automobiles**
Kraftfahrzeug- Scheinwerfer mit einem Lichtleiter
Motor vehicle headlamp comprising a light conducting element

(30) Priorité: 24.10.1996 FR 9612972
(43) Date de publication de la demande: 29.04.1998
(73) Titulaire: VALEO VISION, 93000 Bobigny (FR)
(72) Inventeur: L'Hermine, Alban, 75005 Paris (FR)
(74) Mandataire: Le Forestier, Eric

(56) Documents cités:
- FR-A- 2 514 105
- GB-A- 2 274 158
- US-A- 2 480 178

## Description

La présente invention concerne des projecteurs pour véhicules automobiles.

Elle concerne plus particulièrement un projecteur du type de celui décrit dans le brevet français n° 81 18679 appartenant à le Demanderesse publié sous le n° 2 514 105.

Ce projecteur comprend une source lumineuse réelle, des moyens pour concentrer le rayonnement lumineux issu de cette source sur l'extrémité d'un conduit de lumière muni d'une pluralité de facettes constituant autant de sources lumineuses virtuelles et coopérant avec une pluralité d'éléments dioptriques homologues pour constituer un ensemble de faisceaux élémentaires venant se fondre en un faisceau unique.

Selon l'exemple typique décrit dans le brevet français n° 2 514 105, le conduit de lumière est constitué par un unique barreau transparent disposé à l'horizontal et transversalement à la direction d'éclairement, l'avant du barreau étant constitué par une face verticale de sortie de lumière, et l'arrière du barreau comportant une série de décrochements en hauteur délimitant une série de facettes de réflexion obliques, ces facettes étant disposées en relation de coopération optique avec des lentilles d'axe parallèle à la direction d'éclairement pour que ces lentilles projettent dans cette direction, des images correspondant aux facettes.

Un tel projecteur présente cependant comme inconvénient principal le fait que l'on ne peut pas maîtriser la quantité de flux lumineux arrivant sur chacune des facettes dudit barreau optique unique, du fait des réflexions multiples des rayons lumineux à l'intérieur de ce dernier.

En effet, à cause des réflexions multiples difficilement gérables des rayons lumineux à l'intérieur du barreau, il peut s'avérer qu'une ou plusieurs facettes de ce barreau soi(ent) très faiblement éclairée(s).

Ceci a pour conséquence d'altérer la qualité du faisceau lumineux finalement obtenu.

Par ailleurs, on connaît du document GB 2 274 158, un dispositif d'éclairage qui comporte un réflecteur parabolique, une source de lumière positionnée au foyer dudit réflecteur, et une pluralité de lames transparentes réalisées en matière plastique, superposées, chaque lame transparente comportant à son extrémité la plus éloignée de la source de lumière ainsi que dans sa partie arrière, des facettes de réflexion obliques.

Enfin, on connaît du document US 2 480 178 un dispositif d'éclairage du même type que celui décrit dans le document GB 2 274 158, avec un réflecteur parabolique portant à son foyer une source de lumière, pour former un faisceau lumineux en direction d'une pluralité de lames transparentes réalisées en matériau plastique, juxtaposées et pourvues à leur extrémité la plus éloignée de la source de lumière d'une facette de réflexion. Selon ce dispositif, la sortie de lumière s'effectue perpendiculairement au plan de jonction desdites lames.

Ces deux dispositifs d'éclairage présentent un certain nombre d'inconvénients.

Tout d'abord, l'utilisation d'un réflecteur parabolique dans ce type de projecteur est possible théoriquement, mais conduit dans la pratique à des projecteurs très encombrants et donc inutilisables et pas viables économiquement. En effet, en théorie, si la source de lumière est ponctuelle et placée au foyer du réflecteur parabolique, le faisceau lumineux formé par celui-ci est un faisceau à rayons lumineux parallèles. En pratique, la source de lumière placée au foyer du réflecteur parabolique n'est pas ponctuelle, et le faisceau lumineux réfléchi par ledit réflecteur n'est pas parallèle.

Ainsi, pour respecter les agencements optiques prévus selon les documents GB 2 274 158, US 2 480 178, et obtenir à partir d'une source de lumière étendue un faisceau lumineux pratiquement parallèle issu du réflecteur parabolique, il faut alors utiliser un réflecteur parabolique dont le foyer est éloigné de ce dernier. Vue d'un tel réflecteur, la source de lumière paraîtra sensiblement ponctuelle. Ceci implique que le réflecteur parabolique présente un fort encombrement et l'encombrement global du projecteur est alors important.

En outre, les lames des deux projecteurs selon les documents GB 2 274 158 et US 2 480 178, sont réalisées en matière plastique et présentent alors une tenue médiocre à la température du faisceau lumineux émis par la source de lumière.

Enfin, le procédé de moulage de ces lames est relativement complexe du fait qu'elles présentent un rapport longueur/épaisseur important.

La complexité du procédé engendre une augmentation du coût de fabrication de ces lames et donc du projecteur.

Afin de résoudre les inconvénients précités de l'état de la technique, la présente invention propose un nouveau projecteur de faible encombrement, résistant en température et dans lequel la conduction du flux lumineux entre la source lumineuse réelle et chaque facette, est individualisée de façon à pouvoir maîtriser l'éclairement desdites facettes et obtenir le faisceau lumineux final prévu, tout en présentant un coût de fabrication relativement faible.

Selon l'invention, le projecteur présente les caractéristiques de la revendication 1.

Ainsi, selon l'invention, l'utilisation du réflecteur elliptique permet d'obtenir un faisceau lumineux entrant dans le conduit de lumière, d'étendue angulaire plus large et donc d'une largeur acceptable par rapport à la surface optimisée de la face d'entrée du conduit de lumière, pour obtenir un flux d'éclairage donné dans ledit conduit en vue d'obtenir le faisceau lumineux d'éclairage final prévu.

On notera que la combinaison selon l'invention des lames transparentes individuelles, juxtaposées pour constituer le conduit de lumière et du réflecteur elliptique engendre la gestion des réflexions multiples des rayons lumineux à l'intérieur de chaque lame et donc la prise en compte de nouveaux modes de propagation de la lumière dans les lames pour la formation du faisceau lumineux final prévu, ce que a priori l'homme du métier veut éviter.

En outre, l'utilisation du verre pour les lames transparentes permet de leur conférer une bonne résistance à des températures élevées et selon l'invention, de réaliser lesdites lames par découpage de plaques de verre, ce qui est relativement simple et d'un faible coût.

Selon un mode de réalisation préférentiel du projecteur conforme à l'invention, les lames transparentes présentent des longueurs différentes, et la lame transparente la plus courte est telle que son extrémité pourvue d'une facette de réflexion oblique, est positionnée par rapport à la source de lumière de sorte que les rayons lumineux entrant dans ladite lame viennent sans réflexions multiples se réfléchir sur ladite facette de réflexion oblique.

En particulier cette facette de réflexion oblique est située dans une région du deuxième foyer du réflecteur elliptique.

Ainsi la lame transparente la plus courte du conduit de lumière du projecteur selon l'invention, présente un fonctionnement relativement simple et prévisible puisque les rayons lumineux réfléchis par le réflecteur, et entrant dans ladite lame, arrivent directement sans réflexions multiples sur la facette de réflexion oblique et sont renvoyés sur l'élément dioptrique correspondant. Cette lame de plus courte longueur est une lame monomode du point de vue optique.

Les lames peuvent être superposées selon une direction perpendiculaire à l'axe longitudinal du conduit de lumière.

Chaque lame transparente présentant une face avant de sortie de la lumière, peut comprendre dans sa partie arrière au moins un décrochement délimitant une autre facette de réflexion oblique, ladite facette étant disposée de manière à coopérer optiquement avec l'élément dioptrique correspondant.

Avantageusement, selon l'invention, chaque lame transparente présente un indice de réfraction supérieur à 1,4.

Ceci permet d'éviter au maximum les pertes de flux lumineux par réfraction.

Selon l'invention, il peut être également prévu que chaque lame transparente comporte des faces internes munies d'un revêtement réfléchissant.

En particulier, selon l'invention, l'interface entre deux lames transparentes juxtaposées est aluminée.

Par ailleurs, avantageusement, conformément à la présente invention, pour réaliser un faisceau de coupure, il est prévu des caches disposés sur le trajet de certains faisceaux élémentaires d'au moins certaines facettes, soit directement sur certaines facettes, soit sur la face avant des lames transparentes considérées.

Selon un autre mode de réalisation, conformément à la présente invention, pour réaliser un faisceau de coupure, certaines facettes ont un profil correspondant à la forme de coupure désirée.

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue partielle schématiquement en perspective d'un projecteur selon l'invention,
- la figure 2 est une vue en coupe dans un plan vertical du projecteur de la figure 1,
- la figure 3 est une vue de face de l'extrémité du conduit de lumière du projecteur des figures 1 et 2,
- la figure 4 est une vue partielle en coupe dans un plan vertical d'une variante de réalisation du projecteur de la figure 1,

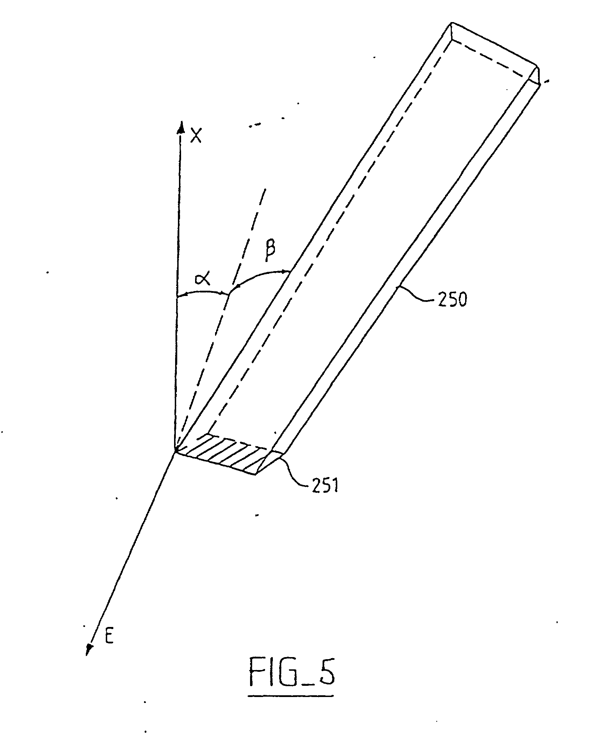

- la figure 5 est une vue schématique d'une lame transparente inclinée de sorte que sa face avant de sortie de lumière ne soit plus verticale.

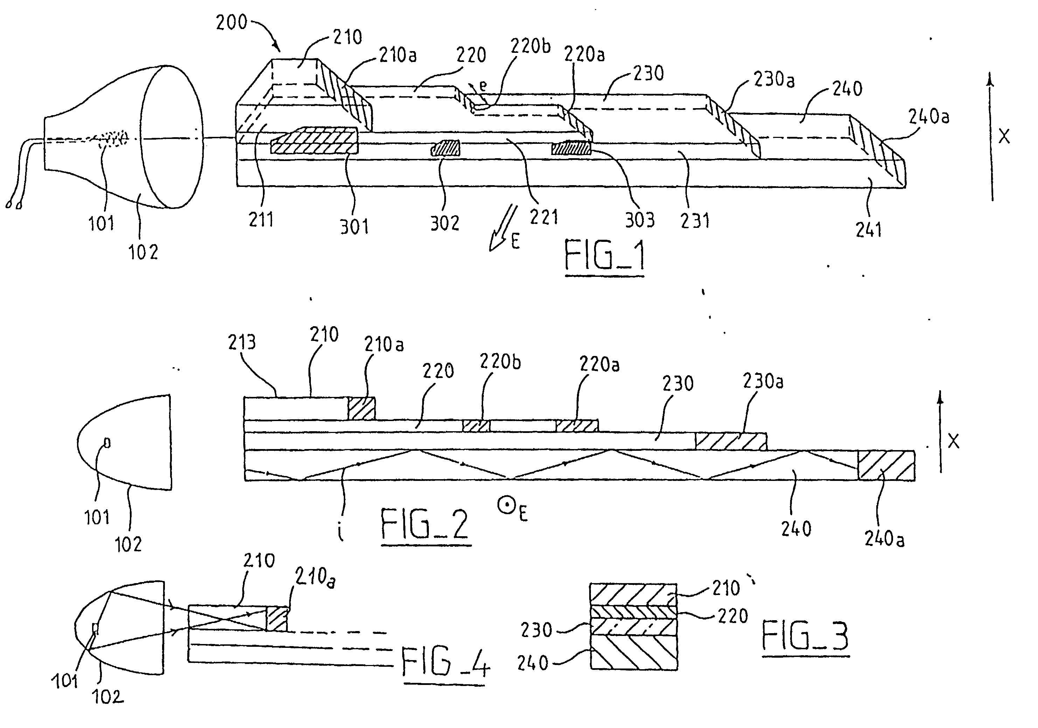

Il est bien entendu que pour tous les détails de réalisation des éléments communs entre le projecteur selon la présente invention et le projecteur décrit dans le brevet d'invention n° 2 514 105 appartenant à la Demanderesse, on se reportera directement à la description de ce dernier et en particulier, à la description des figures 1a, 1b, 2, 3a à 3c de celui-ci.

En référence aux figures 1 à 3 de la présente demande de brevet, on a représenté un projecteur de véhicule automobile qui comprend une source lumineuse réelle 101 et des moyens 102 pour concentrer le rayonnement lumineux issu de cette source sur l'extrémité d'un conduit de lumière 200.

Les moyens de concentration du rayonnement lumineux émis de la source lumineuse réelle 101, sont constitués essentiellement par un réflecteur ou miroir elliptique 102, la source lumineuse 101 étant constituée par le filament d'une lampe d'automobile ou l'arc d'une lampe à décharge, disposée de préférence dans l'axe du réflecteur elliptique 102, dans une région de son premier foyer.

Le flux lumineux issu de la source lumineuse réelle 101 est réfléchi par le réflecteur elliptique 102 selon un ensemble de rayons qui converge vers la zone focale du deuxième foyer dudit réflecteur elliptique.

On pourra prévoir, comme cela est prévu pour le projecteur décrit dans le brevet d'invention n° 2 541 105, que le réflecteur elliptique 102 soit muni d'une ouverture (ici non représentée) constituant une fenêtre de lumière laissant passer directement les rayons issus de la source lumineuse réelle.

Dans l'axe du réflecteur elliptique 102 s'étend le conduit de lumière 200.

Comme on peut le voir sur les figures 1 et 2, ce conduit de lumière 200 comporte une pluralité de lames transparentes, ici de différentes longueurs, juxtaposées selon au moins une direction, chaque lame transparente s'étendant suivant l'axe longitudinal du conduit de lumière 200 et sensiblement transversalement à la direction d'éclairement E.

Dans cet exemple de réalisation, l'axe longitudinal du conduit de lumière s'étend horizontalement.

Le conduit de lumière 200 comporte en particulier quatre lames transparentes 210, 220, 230, 240, de différentes longueurs, ici superposées selon la direction X verticale et transversale à l'axe du conduit de lumière et à la direction d'éclairement E.

Chaque lame transparente est réalisée en verre ayant un indice de réfraction aussi élevé que possible et préférentiellement supérieur à 1,4.

Chaque lame transparente 210, 220, 230, 240 comporte à son extrémité la plus éloignée de la source lumineuse réelle 101, une facette de réflexion oblique 210a, 220a, 230a, 240a, lesdites facettes étant disposées de manière à coopérer optiquement avec des éléments dioptriques, ici des lentilles non représentées, d'axe parallèle à la direction d'éclairement pour que ces lentilles projettent dans cette direction des images correspondant aux facettes.

En effet, à l'avant du système optique ainsi défini ci-dessus, il est prévu un ensemble d'éléments dioptriques, lentilles convergentes (ici non représentées) telles que des lentilles de Fresnel (pour optimiser leur encombrement) dont les axes sont sensiblement parallèles à la direction d'éclairement E. Les lentilles sont disposées en relation de coopération optique avec les facettes 210a, 220a, 220b, 230a, 240a qui sont sensiblement disposées au foyer des lentilles.

Avantageusement, on peut prévoir, comme le montre la figure 4, que la lame transparente 210 la plus courte du conduit de lumière 200 est telle que son extrémité pourvue de la facette de réflexion oblique 210a est située dans la région du deuxième foyer du réflecteur elliptique 102. Une telle lame est alors une lame « monomode » puisque les rayons lumineux réfléchis par le réflecteur et entrant dans cette lame viennent se réfléchir sans réflexions multiples sur sa facette de réflexion oblique pour sortir de ladite lame en direction de l'élément dioptrique correspondant.

Chaque lame transparente comporte une face d'entrée de la lumière s'étendant transversalement à l'axe longitudinal du conduit de lumière. L'ensemble des faces d'entrée de la lumière desdites lames constitue la face d'entrée du conduit de lumière (voir figure 3). Chaque lame transparente 210, 220, 230, 240 comporte en outre une face de sortie de lumière 211, 221, 231, 241 qui selon le mode de réalisation représenté sur les figures 1 et 2 s'étend verticalement et perpendiculairement à la direction d'éclairement repérée par la flèche E.

La direction verticale X de juxtaposition des lames transparentes 210, 220, 230, 240 ainsi que la disposition et l'orientation des facettes associées 210a, 220a, 220b, 230a, 240a permettent d'obtenir un champ d'éclairage de grande largeur conforme à ce qui est recherché en matière de faisceau d'éclairage de véhicule automobile.

Bien entendu, selon une variante de réalisation représentée plus particulièrement sur la figure 4, on peut prévoir que la face de sortie de la lumière de chaque lame transparente 250 présente une inclinaison α, β par rapport à l'axe vertical et donc une inclinaison d'un angle β différent de 90 degrés par rapport à la direction d'éclairement E.

En outre, il est possible selon la présente invention, comme le montre les figures 1 et 2 qu'une ou plusieurs lames transparente(s) comporte(nt) d'autres facettes de réflexion 220b, ces facettes 220b étant délimitées par des décrochements de hauteur égale à e, prévus dans la partie arrière de chaque lame, comme cela est la cas en particulier de la lame transparente 220.

De façon préférentielle, le nombre maximum de facettes par lames est limité à deux pour faciliter la fabrication des lames minimisant ainsi les coûts de production.

Les facettes de réflexion 210a, 220a, 220b, 230a, 240a du conduit de lumière 200 sont inclinées par rapport à la direction d'éclairement E, leur inclinaison étant comprise entre 35 et 55 degrés, et de préférence égale à 45 degrés.

On se reportera par exemple au mode de réalisation représenté sur la figure 3c du brevet n° 2 514 105, selon lequel on peut voir que pour un indice de réfraction de 1,7, on atteint un optimum pour un angle de facettes de 53 degrés par rapport à la direction d'éclairement E.

En particulier, selon le mode de réalisation représenté sur la figure 4, la lame transparente 250 présentant une inclinaison différente de 90 degrés par rapport à la direction d'éclairement E, nécessairement la facette de réflexion 251 associée présente une inclinaison par rapport à la verticale différente de 45 degrés pour réfléchir un faisceau lumineux dans la direction d'éclairement.

Avantageusement, pour éviter les pertes de flux lumineux par réfraction, il peut être prévu que les faces internes latérales, avant et arrière de chaque lame transparente soient revêtues d'un revêtement réfléchissant.

En particulier, les interfaces entre les lames transparentes peuvent être aluminées.

Les lames transparentes 210, 220, 230, 240 sont assemblées entre elles par collage en des points ponctuels.

Comme cela a déjà été décrit dans le brevet d'invention n° 2 514 105, il peut être prévu une lentille convergente disposée en regard de la fenêtre prévue dans le miroir elliptique 102 en relation de coopération optique avec la source lumineuse réelle 101 qui est sensiblement à son foyer.

Avec la disposition précitée, le flux lumineux issu de la source de lumière réelle 101, réfléchi par le miroir elliptique 102, pénètre dans le conduit de lumière et dans chaque lame transparente 210, 220, 230, 240 le constituant par leur section d'entrée respective et s'y trouve réfléchi, dans un régime de réflexion totale, par les facettes 210a, 220a, 220b, 230a, 240a associées.

Les faisceaux élémentaires réfléchis sont repris par les lentilles (non représentées) qui projettent vers l'avant du projecteur les faisceaux lumineux correspondants.

Avec une telle disposition, il est possible de maîtriser l'éclairement de chaque facette puisque le flux rentrant dans une lame transparente est conduit forcément jusqu'à la facette réfléchissante située à l'extrémité de ladite lame. Chaque lame transparente constitue un conduit de lumière individuel pour une facette du conduit de lumière du projecteur selon l'invention.

On peut doser l'éclairement de chaque facette par le dosage d'éclairement de chaque lame transparente portant ladite facette et former ainsi le faisceau lumineux final prévu.

En projection, chaque facette à réflexion totale 210a, 220a, 220b, 230a, 240a, donne sur un écran, à travers la lentille correspondante une image correspondant au flux d'entrée reçue par la facette et projetée selon la direction E, l'image virtuelle donnée par chaque facette ayant une largeur égale au côté de la face d'entrée de la lame transparente correspondante et une hauteur égale à la hauteur de la lame ou à la hauteur du décrochement e (en ce qui concerne la facette 220b de la lame 220).

Les différents faisceaux élémentaires se fondent en un faisceau d'émission unique et par une disposition judicieuse des axes des lentilles plus ou moins décalés par rapport aux axes des faisceaux élémentaires qu'elles interceptent, on peut réaliser toute disposition d'éclairement, pour un éclairement global pour véhicule automobile.

En particulier, on peut faire en sorte que les images projetées en correspondance avec les différentes facettes soient superposées ou juxtaposées et l'on peut de même superposer à ces images ou juxtaposer à ces images, celle qui provient de la fenêtre du miroir elliptique.

Pour réaliser un faisceau de coupure, il est prévu selon l'invention comme le montre plus particulièrement la figure 1, des caches 301, 302, 303 disposés sur le trajet de certains faisceaux élémentaires d'au moins certaines facettes 210a, 220a, 200b, ici sur la face avant des lames transparentes correspondantes.

Selon une variante non représentée, on peut prévoir que ces caches soient directement posés sur les facettes concernées.

En outre, selon une autre variante, on peut aussi prévoir que certaines facettes présentent le profil correspondant à la forme de la coupure désirée.

La présente invention n'est nullement limitée aux modes de réalisation décrits et représentés, mais l'homme du métier saura y apporter toute variante conforme à son esprit.

En particulier, on peut envisager de réaliser un conduit de lumière avec des lames transparentes juxtaposées selon une direction horizontale transversale à l'axe longitudinal du conduit de lumière, par exemple dans la direction d'éclairement, qui présentent des longueurs égales de telle sorte que les facettes d'extrémité desdites lames soient également juxtaposées selon cette direction transversale avec éventuellement des inclinaisons différentes.

## Revendications

1. Projecteur pour véhicule automobile, comprenant une source lumineuse réelle (101) disposée dans une région d'un premier foyer d'un réflecteur elliptique (102) qui concentre le rayonnement lumineux issu de cette source sur l'extrémité d'un conduit de lumière (200) muni d'une pluralité de facettes (210a, 220a, 220b, 230a, 240a) constituant autant de sources lumineuses virtuelles et coopérant avec une pluralité d'éléments dioptriques homologues pour constituer un ensemble de faisceaux lumineux élémentaires venant se fondre en un faisceau unique, **caractérisé en ce que** le conduit de lumière (200) comporte une pluralité de lames transparentes (210, 220, 230, 240...) réalisées en verre et juxtaposées selon au moins une direction (X), chaque lame transparente (210, 220, 230, 240...) s'étendant selon l'axe longitudinal dudit conduit de lumière (200) et comportant, au moins à son extrémité la plus éloignée de la source lumineuse réelle (101), une facette de réflexion oblique (210a, 220a, 230a, 240a...), lesdites facettes étant disposées de manière à coopérer optiquement avec lesdits éléments dioptriques d'axe parallèle à la direction d'éclairement (E) pour que ceux-ci projettent dans cette direction des images correspondant aux facettes.

2. Projecteur selon la revendication 1, **caractérisé en ce que** lesdites lames transparentes (210, 220, 230, 240...) présentent des longueurs différentes.

3. Projecteur selon la revendication 2, **caractérisé en ce que** l'extrémité pourvue d'une facette de réflexion oblique de la lame transparente la plus courte est positionnée par rapport à la source de lumière de sorte que les rayons lumineux entrant dans ladite lame viennent sans réflexions multiples se réfléchir sur ladite facette de réflexion oblique.

4. Projecteur selon l'une des revendications 2 ou 3, **caractérisé en ce que** l'extrémité pourvue d'une facette de réflexion oblique (210a) de la lame transparente la plus courte (210) est positionnée dans une région du deuxième foyer du réflecteur elliptique (102).

5. Projecteur selon l'une des revendications 1 à 4, **caractérisé en ce que** les éléments dioptriques sont des lentilles de Fresnel.

6. Projecteur selon l'une des revendications 1 à 5, **caractérisé en ce que** les lames transparentes (210, 220, 230, 240...) sont superposées selon une direction (X) perpendiculaire à l'axe longitudinal dudit conduit de lumière (200).

7. Projecteur selon l'une des revendications 1 à 6, **caractérisé en ce que** chaque lame transparente (220) comportant une face avant de sortie de lumière (221), comprend dans sa partie arrière au moins un décrochement délimitant une autre facette de réflexion oblique (220b), disposée de manière à coopérer optiquement avec l'élément dioptrique correspondant.

8. Projecteur selon l'une des revendications 1 à 7, **caractérisé en ce que** chaque lame transparente (210, 220, 230, 240) présente un indice de réfraction supérieur à 1,4.

9. Projecteur selon l'une des revendications 1 à 8, **caractérisé en ce que** chaque lame transparente (210, 220, 230, 240) comporte des faces internes munies d'un revêtement réfléchissant.

10. Projecteur selon la revendication 9, **caractérisé en ce que** l'interface entre deux lames transparentes juxtaposées est aluminée.

11. Projecteur selon l'une des revendications 1 à 10, **caractérisé en ce que** les facettes de réflexion (210a, 220a, 220b, 230a, 240a) des lames transparentes (210, 220, 230, 240...) présentent une orientation par rapport à la direction d'éclairement (E) comprise environ entre 35 et 55 degrés.

12. Projecteur selon l'une des revendications 1 à 11, **caractérisé en ce que**, pour la réalisation d'un faisceau de coupure, il est prévu des caches (301, 302, 303) disposés sur le trajet de certains faisceaux élémentaires d'au moins certaines facettes de réflexion (210a, 220a, 220b), soit directement sur certaines facettes, soit sur la face avant des lames transparentes considérées.

13. Projecteur selon l'une des revendications 1 à 11, **caractérisé en ce que**, pour réaliser un faisceau de coupure, certaines facettes de réflexion ont un profil correspondant à la forme de coupure désirée.

14. Projecteur selon l'une des revendications 1 à 13, **caractérisé en ce que** les lames transparentes (210, 220, 230, 240) sont assemblées entre elles par collage en des endroits ponctuels.

## Claims

1. Headlight for a motor vehicle, comprising a real light source (101) disposed in a region of a first focal point of an elliptical reflector (102) which concentrates the light radiation issuing from this source onto the end of a light pipe (200) provided with a plurality of facets (210a, 220a, 220b, 230a, 240a) constituting as many virtual light sources and cooperating with a plurality of homologous dioptric elements for forming a set of elementary light beams merging into a single beam, **characterised in that** the light pipe (200) has a plurality of transparent sheets (210, 220, 230, 240...) produced from glass and juxtaposed in at least one direction (X), each transparent sheet (210, 220, 230, 240...) extending along the longitudinal axis of the said light pipe (200) and having, at least at its end furthest away from the real light source (101), an oblique reflection facet (210a, 220a, 230a, 240a...), the said facets being disposed so as to cooperate optically with the said dioptric elements with an axis parallel to the direction of illumination (E) so that the latter project, in this direction, images corresponding to the facets.

2. Headlight according to Claim 1, **characterised in that** the said transparent sheets (210, 220, 230, 240...) have different lengths.

3. Headlight according to Claim 2, **characterised in that** the end provided with an oblique reflection facet of the shortest transparent sheet is positioned with respect to the light source so that the light rays entering the said sheet come without multiple reflections reflecting onto the said oblique reflection facet.

4. Headlight according to one of Claims 2 or 3, **characterised in that** the end provided with an oblique reflection facet (210a) of the shortest transparent sheet (210) is positioned in a region of the second focal point of the elliptical reflector (102).

5. Headlight according to one of Claims 1 to 4, **characterised in that** the dioptric elements are Fresnel lenses.

6. Headlight according to one of Claims 1 to 5, **characterised in that** the transparent sheets (210, 220, 230, 240...) are superimposed in a direction (X) perpendicular to the longitudinal axis of the said light pipe (200).

7. Headlight according to one of Claims 1 to 6, **characterised in that** each transparent sheet (220) having a front light exit face (221) comprises, in its rear part, at least one recess delimiting another oblique reflection facet (220b), disposed so as to cooperate optically with the corresponding dioptric element.

8. Headlight according to one of Claims 1 to 7, **characterised in that** each transparent sheet (210, 220, 230, 240) has a refractive index greater than 1.4.

9. Headlight according to one of Claims 1 to 8, **characterised in that** each transparent sheet (210, 220, 230, 240) has internal faces provided with a reflective coating.

10. Headlight according to Claim 9, **characterised in that** the interface between two juxtaposed transparent sheets is aluminised.

11. Headlight according to one of Claims 1 to 10, **characterised in that** the reflection facets (210a, 220a, 220b, 230a, 240a) of the transparent sheets (210, 220, 230, 240...) have an orientation with respect to the direction of illumination (E) of between approximately 35 and 55 degrees.

12. Headlight according to one of Claims 1 to 11, **characterised in that**, for producing a cut-off beam, masks (301, 302, 303) are provided, disposed on the path of some elementary beams of at least some reflection facets (210a, 220a, 220b), either directly on some facets, or on the front face of the transparent sheets in question.

13. Headlight according to one of Claims 1 to 11, **characterised in that**, in order to produce a cut-off beam, some reflection facets have a profile corresponding to the required cut-off shape.

14. Headlight according to one of Claims 1 to 13, **characterised in that** the transparent sheets (210, 220, 230, 240) are connected together by adhesive bonding at isolated points.

## Patentansprüche

1. Scheinwerfer für Kraftfahrzeuge mit einer reellen Lichtquelle (101), die in einem Bereich eines ersten Brennpunkts eines elliptischen Reflektors (102) angeordnet ist, der die von dieser Lichtquelle ausgehende Lichtstrahlung auf das Ende eines Lichtleiters (200) konzentriert, der mit einer Vielzahl von Facetten (210a, 220a, 220b, 230a, 240a) versehen ist, die ebensoviele virtuelle Lichtquellen bilden und mit einer Vielzahl von entsprechenden dioptrischen Elementen zusammenwirken, um eine Reihe von Elementarlichtbündeln zu bilden, die sich zu einem einzigen Lichtbündel vereinigen,
**dadurch gekennzeichnet, dass** der Lichtleiter (200) eine Vielzahl von lichtdurchlässigen Plättchen (210, 220, 230, 240...) umfasst, die in Glas ausgeführt sind und mindestens in einer Richtung (X) nebeneinander liegen, wobei jedes lichtdurchlässige Plättchen (210, 220, 230, 240...) sich entlang der Längsachse des Lichtleiters (200) erstreckt und zumindest an dem von der reellen Lichtquelle (101) am weitesten entfernten Ende eine schräge Reflexionsfacette (210a, 220a, 230a, 240a...) aufweist, wobei diese Facetten so angeordnet sind, **dass** sie optisch mit den dioptrischen Elementen zusammenwirken, deren Achse parallel zur Beleuchtungsrichtung (E) verläuft, damit diese den Facetten entsprechende Abbildungen in diese Richtung projizieren.

2. Scheinwerfer nach Anspruch 1,
**dadurch gekennzeichnet, dass** die lichtdurchlässigen Plättchen (210, 220, 230, 240...) unterschiedliche Längen aufweisen.

3. Scheinwerfer nach Anspruch 2,
**dadurch gekennzeichnet, dass** das mit einer schrägen Reflexionsfacette versehene Ende des kürzesten lichtdurchlässigen Plättchens in Bezug zur Lichtquelle so positioniert ist, **dass** die in dieses Plättchen einfallenden Lichtstrahlen ohne Mehrfachreflexionen auf diese schräge Reflexionsfacette reflektiert werden.

4. Scheinwerfer nach einem der Ansprüche 2 oder 3,
**dadurch gekennzeichnet, dass** das mit einer schrägen Reflexionsfacette (210a) versehene Ende des kürzesten lichtdurchlässigen Plättchens (210) in einem Bereich des zweiten Brennpunkts des elliptischen Reflektors (102) positioniert ist.

5. Scheinwerfer nach einem der Ansprüche 1 bis 4,
**dadurch gekennzeichnet, dass** die dioptrischen Elemente Fresnel-Linsen sind.

6. Scheinwerfer nach einem der Ansprüche 1 bis 5,
**dadurch gekennzeichnet, dass** die lichtdurchlässigen Plättchen (210, 220, 230, 240...) in einer senkrecht zur Längsachse des Lichtleiters (200) verlaufenden Richtung (X) übereinander geschichtet sind.

7. Scheinwerfer nach einem der Ansprüche 1 bis 6,
**dadurch gekennzeichnet, dass** jedes lichtdurchlässige Plättchen (220), das über eine vordere Lichtaustrittsseite (221) verfügt, in seinem rückwärtigen Bereich mindestens einen Absatz aufweist, der eine weitere schräge Reflexionsfacette (220b) begrenzt, die so angeordnet ist, **dass** sie optisch mit dem entsprechenden dioptrischen Element zusammenwirkt.

8. Scheinwerfer nach einem der Ansprüche 1 bis 7,
**dadurch gekennzeichnet, dass** jedes lichtdurchlässige Plättchen (210, 220, 230, 240) eine Brechzahl größer als 1,4 aufweist.

9. Scheinwerfer nach einem der Ansprüche 1 bis 8,
**dadurch gekennzeichnet, dass** jedes lichtdurchlässige Plättchen (210, 220, 230, 240) Innenflächen aufweist, die mit einer reflektierenden Beschichtung versehen sind.

10. Scheinwerfer nach Anspruch 9,
**dadurch gekennzeichnet, dass** die Grenzfläche zwischen den nebeneinander liegenden lichtdurchlässigen Plättchen aluminiert ist.

11. Scheinwerfer nach einem der Ansprüche 1 bis 10,
**dadurch gekennzeichnet, dass** die Reflexionsfacetten (210a, 220a, 220b, 230a, 240a) der lichtdurchlässigen Plättchen (210, 220, 230, 240...) eine Ausrichtung bezüglich der Beleuchtungsrichtung (E) aufweisen, die etwa zwischen 35 und 55 Grad liegt.

12. Scheinwerfer nach einem der Ansprüche 1 bis 11
**dadurch gekennzeichnet, dass** zur Realisierung eines Lichtbündels mit Hell-Dunkel-Grenze Abdeckungen (301, 302, 303) vorgesehen sind, die im Strahlengang einiger Elementarlichtbündel zumindest einiger Reflexionsfacetten (210a, 220a, 220b) angeordnet sind, und zwar entweder unmittelbar auf einigen Facetten oder auf der Vorderseite der jeweiligen lichtdurchlässigen Plättchen.

13. Scheinwerfer nach einem der Ansprüche 1 bis 11,
**dadurch gekennzeichnet, dass** zur Realisierung eines Lichtbündels mit Hell-Dunkel-Grenze einige Reflexionsfacetten ein Profil entsprechend der Form der gewünschten Hell-Dunkel-Grenze aufweisen.

14. Scheinwerfer nach einem der Ansprüche 1 bis 13,
**dadurch gekennzeichnet, dass** die lichtdurchlässigen Plättchen (210, 220, 230, 240) punktuell miteinander verklebt sind.
